# EUROPEAN PATENT APPLICATION

(11) **EP 3 279 358 A1**
(43) Date of publication of application: **07.02.2018**
(21) Application number: 16772444.2
(22) Date of filing: 22.03.2016
(51) Int. Cl.: C22C 38/00, C22C 38/34, C22C 38/54

(54) **HEAT-TREATED STEEL WIRE HAVING EXCELLENT BENDABILITY**

(30) Priority: 31.03.2015 JP 2015070532
(71) Applicant: Kabushiki Kaisha Kobe Seiko Sho (Kobe Steel, Ltd.), Kobe-shi, Hyogo 651-8585 (JP)
(72) Inventor: OURA, Hiroshi, Kobe-shi, Hyogo 657-0863 (JP); MASUDA, Tomokazu, Kobe-shi, Hyogo 657-0863 (JP)
(74) Representative: Müller-Boré & Partner Patentanwälte PartG mbB
(86) International application number: PCT/JP2016/058960
(87) International publication number: WO 2016/158563

(57) **Abstract**

The present invention provides a heat-treated steel wire having excellent bendability. The heat-treated steel wire of the present invention includes, in % by mass: C: 0.5 to 0.8%, Si: 1.5 to 2.5%, Mn: 0.5 to 1.5%, P: more than 0% and 0.02% or less, S: more than 0% and 0.02% or less, Cr: 0.3 to less than 0.7%, V: 0.05 to 0.5%, Al: more than 0% and 0.01% or less, N: more than 0% and 0.007% or less, and O: more than 0% and 0.004% or less, with the balance being iron and inevitable impurities, wherein, when electrolytic extraction residue analysis is performed using a 1.0 µm filter and a 0.4 µm filter, a ratio of [amount of Cr based carbides in a 1.0 µm filter residue/amount of an electrolyte] is 1.0% or more and 2.80% or less, and, when residue analysis of the filtrate obtained by the 1.0 µm filter is performed, a ratio of [amount of Cr based carbides in a 0.4 µm filter residue/amount of an electrolyte] is 0.10% or less.

## Description

### Technical Field

The present invention relates to a heat-treated steel wire, and more particularly to a heat-treated steel wire having excellent bendability.

### Background Art

With weight reduction of automobiles and output power increase of automobile engine, various springs used in engines, clutches, fuel injection systems and the like are required to achieve higher stress. For the achievement of higher stress, there is a need to increase the strength of a heat-treated steel wire that is a spring material, from the viewpoint of sagging resistance and durability. Meanwhile, a spring is generally obtained by coiling a heat-treated steel wire obtained by subjecting a drawn wire material to a quenching and tempering treatment. Therefore, the heat-treated steel wire is required to have the bendability that prevents breakage during coiling. However, with the increase of the strength, ductility and toughness of the heat-treated steel wire are degraded, so that breakage easily occurs during coiling, thus making it difficult to provide a heat-treated steel wire having high strength and excellent bendability.

Thus, there have hitherto been proposed the following techniques to these problems.

Patent Document 1 discloses a heat-treated steel for a high-strength spring, having a predetermined chemical composition, the N content being particularly controlled to 0.007% or less, with the balance being iron and inevitable impurities, wherein an extraction residue analysis value after a heat treatment satisfies the following inequality expression: [V content in the filtrate obtained by filtering through a 0.2 µm filter (% by mass)] ≥ [V content in a steel (% by mass)] × 0.4.

Patent Document 2 discloses a high-strength spring steel having excellent brittle fracture-resistance characteristics, which has a predetermined composition, wherein the amount of solid-soluted carbon (C) is set at 0.15% or less, the amount of Cr included as a Cr-containing precipitate is set at 0.10% or less, a TS value represented by a predetermined formula is set at 24 .8% or more, and a prior austenite grain size is set at 10 µm or less.

### Prior Art Document

### Patent Document

Patent Document 1: WO 2007/114491 A
Patent Document 2: JP 2002-180198 A

### Disclosure of the Invention

### Problems to be Solved by the Invention

For example, in Patent Document 1, the heating temperature before rolling is set at 1,250°C to thereby reduce undissolved carbides as much as possible. However, when the heating temperature before rolling is too high, decarburization of a rolled material easily occurs, thus making it difficult to remove in the post-process, which may degrade bendability. In Patent Document 2, there is no setting of temperature conditions during blooming and wire rod rolling, and coarse Cr-containing precipitates are formed, so that there is a possibility that sufficient bendability cans not be obtained.

The present invention has been made in light of the foregoing circumstance, and it is an object of the present invention to provide a heat-treated steel wire having high strength and excellent bendability.

### Means for Solving the Problems

The present invention that can solve the foregoing problems provides a heat-treated steel wire including, in % by mass: C: 0.5 to 0.8%, Si: 1.5 to 2.5%, Mn: 0.5 to 1.5%, P: more than 0% and 0.02% or less, S: more than 0% and 0.02% or less, Cr: 0.3 to less than 0.7%, V: 0.05 to 0.5%, Al: more than 0% and 0.01% or less, N: more than 0% and 0.007% or less, and O: more than 0% and 0.004% or less, with the balance being iron and inevitable impurities, wherein, when electrolytic extraction residue analysis is performed using a 1.0 µm filter and a 0.4 µm filter, a ratio of [amount of Cr based carbides in a 1.0 µm filter residue/amount of an electrolyte] is 1.0% or more and 2.80% or less, and, when residue analysis of the filtrate obtained by the 1.0 µm filter is performed, a ratio of [amount of Cr based carbides in a 0.4 µm filter residue/amount of an electrolyte] is 0.10% or less.

Further, in a preferred embodiment, the above-mentioned heat-treated steel wire includes: in % by mass, at least one of the following (a) and (b):
(a) Ni: more than 0% and 0.3% or less, and
(b) B: more than 0% and 0.01% or less.

A spring obtained by using the above-mentioned heat-treated steel wire is also included in the present invention.

### Effects of the Invention

The present invention can provide a heat-treated steel wire having a tensile strength of 2,100 MPa or more and excellent bendability by defining the composition of the heat-treated steel wire and the amount of Cr based carbides based on an electrolytic extraction method. When using the heat-treated steel wire of the present invention, a spring having excellent bendability can be provided.

### Mode for Carrying Out the Invention

The inventors have studied from various perspectives to suppress breakage during coiling of a high-strength heat-treated steel wire, and particularly to improve the bendability by improving toughness and ductility of the heat-treated steel wire. As a result, it has been found that frequency of coiling breakage occurring during coiling of the heat-treated steel wire tends to increase as the strength of the heat-treated steel wire increases . As a result of minute study on the cause thereof, it has been found that the frequency of coiling breakage is not only involved in the strength of the heat-treated steel wire, but also involved in the amount of precipitated Cr based carbides. It has also been found that coiling breakage can be suppressed even at high strength by controlling the amount of precipitated Cr based carbides.

Regarding the heat-treated steel wire in which breakage occurred during coiling, and the heat-treated steel wire in which no breakage occurred, the amount of Cr based carbides of a surface layer of the heat-treated steel wire was examined by measuring the amount of the electrolytic extraction residue. Analysis of the electrolytic extraction residue enables property analysis of carbides, serving as a starting point of coiling breakage, of a surface layer of the heat-treated steel wire, and also enables appropriate evaluation using a larger inspection volume as an object as compared with observation of the structure under an electron microscope.

As a result of analysis of the electrolytic extraction residue, regarding Cr based carbides obtained from the heat-treated steel wire in which breakage occurred, the amount of Cr based carbides on a filter was smaller than that of the heat-treated steel wire in which breakage did not occur. Thus, as a result of intensive study on a relation between the amount of Cr based carbides of the heat-treated steel wire and the breakage, it has been found that toughness and ductility are improved when a ratio of the amount of an electrolyte to the amount of the residue is within the following predetermined range, excellent bendability is obtained:
when electrolytic extraction residue analysis is performed using a 1.0 µm filter and a 0.4 µm filter, a ratio of [amount of Cr based carbides in a 1.0 µm filter residue/amount of an electrolyte] (hereinafter may be referred to as the "amount of the residue of a 1.0 µm filter/amount of an electrolyte") : is 1. 0% or more and 2.80% or less, and
when residue analysis of the filtrate obtained by the 1.0 µm filter is performed, a ratio of [amount of Cr based carbides in a 0.4 µm filter residue/amount of an electrolyte] (hereinafter may be referred to as the "amount of the residue of a 0.4 µm filter/amount of an electrolyte") is 0.10% or less.

In the present invention, the gist is that Cr based carbides also include, in addition to Cr carbides, Cr carbonitrides, composite carbides with carbide forming elements such as V, and composite carbonitride.

Based on the above findings, it has been found that a heat-treated steel wire having high strength and excellent bendability can be provided by appropriately controlling Cr based carbides and composition, the present invention has been made. The reason for defining Cr based carbides and compositions will be described in detail below.

### a ratio of [amount of the residue of a 1.0 µm filter/amount of an electrolyte]: 1.0% or more and 2.80% or less

Cr based carbides having a particle size of more than 1.0 µm cause induction of coiling breakage, thus significantly degrading the bendability of a high-strength heat-treated steel wire. Therefore, a ratio of "amount of the residue of a 1.0 µm filter/amount of an electrolyte" is 2.80% or less, preferably 2.70% or less, and more preferably 2.60% or less. Meanwhile, Cr based carbides also play a role of improving the strength of the heat-treated steel wire, so that when the amount of Cr based carbides is too small, the strength of the heat-treated steel wire is lacking. A ratio of "amount of the residue of a 1.0 µm filter/amount of an electrolyte" is 1.0% or more, preferably 1.20% or more, and more preferably 1.40% or more.

### a ratio of [amount of the residue of a 0.4 µm filter/amount of an electrolyte]: 0.10% or less

When the amount of precipitated Cr based carbides having a particle size more than 0.4 µm increases, the toughness and ductility of the heat-treated steel wire are degraded, leading to degradation of the bendability. Therefore, the smaller the amount of Cr based carbides having a particle size more than 0.4 µm becomes, the better. A ratio of "amount of the residue of a 0.4 µm filter/amount of an electrolyte" is 0.10% or less, preferably 0.08% or less, and more preferably 0.06% or less. Meanwhile, the smaller the amount of Cr based carbides having a particle size of 0.4 µm or less becomes, the more the toughness and ductility are excellent. When the heating temperature during the heat treatment is too high or the heating and holding time is too long, in order to reduce Cr based carbides, coarsening of prior γ crystal grains proceed, whereby, the toughness and ductility may be further degraded. Therefore, a ratio of "amount of the residue of a 0.4 µm filter/amount of an electrolyte" is preferably 0.01% or more, and more preferably 0.02% or more.

Next, a description will be made of the chemical composition in a steel used for the heat-treated steel wire according to the present invention.

### [C: 0.5 to 0.8%]

Carbon (C) is an element that is effective in improving the strength of the heat-treated steel wire. To effectively exhibit these effects, the C content is 0.5% or more, preferably 0.55% or more, and more preferably 0.6% or more. With the increase of the C content, the strength is improved. Any excessive C content, however, causes precipitation of a large amount of coarse cementite, thus exerting an adverse influence on the bendability of the heat-treated steel wire. Therefore, the C content is 0.8% or less, preferably 0.75% or less, and more preferably 0.7% or less.

### [Si: 1.5 to 2.5%]

Silicon (Si) is an element that is effective in improving deoxidation of the steel and the strength of the heat-treated steel wire. To effectively exhibit these effects, the Si content is 1.5% or more, preferably 1.55% or more, and more preferably 1.6% or more. Any excessive Si content, however, not only causes hardening of the material, but also degrades ductility and toughness, and may increase the amount of decarburization of a surface, thus degrading fatigue characteristics of the spring. Therefore, the Si content is 2.5% or less, preferably 2.4% or less, and more preferably 2.3% or less.

### [Mn: 0.5 to 1.5%]

Manganese (Mn) serves to fix, in the steel, sulfur (S) to thereby convert it into MnS in addition to deoxidizing the steel, and also enhances hardenability to thereby contribute to the improvement of the spring strength. To effectively exhibit these effects, the Mn content is 0.5% or more, preferably 0.6% or more, and more preferably 0.7% or more. Any excessive Mn content, however, excessively improves hardenability, and thus supercooled structures such as martensite and bainite are easily formed. Therefore, the Mn content is 1.5% or less, preferably 1.4% or less, and more preferably 1.3% or less.

### [P: more than 0% and 0.02% or less]

Phosphor (P) segregates in the prior austenite grain boundary to thereby cause embrittlement of the structure, leading to degradation of fatigue characteristics. Therefore, the P content is 0.02% or less, and preferably 0.018% or less. The lower the P content is, the better, and there are manufacturing difficulties in control of the P content to zero and about 0.003% of P may be included as inevitable impurities.

### [S: more than 0% and 0.02% or less]

Sulfur (S) segregates in the prior austenite grain boundary to thereby cause embrittlement of the structure, leading to degradation of fatigue characteristics. Therefore, the S content is 0.02% or less, and preferably 0.015% or less. The lower the S content is, the better, and there are manufacturing difficulties in control of the S content to zero and about 0.003% of S may be included as inevitable impurities.

### [Cr: 0.3 to less than 0.7%]

Chromium (Cr) has not only the effect of improving hardenability to thereby improve the spring strength, but also the effect of decreasing the activity of carbon (C) to thereby prevent decarburization during rolling and a heat treatment. To effectively exhibit these effects, the Cr content is 0.3% or more, preferably 0.35% or more, and more preferably 0.4% or more. Meanwhile, when the Cr content increases, not only Cr based carbides in the steel increase, but also coarse Cr based carbides are formed, thus degrading the bendability of the heat-treated steel wire. Therefore, the Cr content is less than 0.7%, preferably 0.68% or less, and more preferably 0.65% or less.

### [V: 0.05 to 0.5%]

Vanadium (V) has the function of making crystal grains finer during hot-rolling, and a quenching and tempering treatment to thereby improve ductility and toughness. V causes secondary precipitation hardening during a high temperature treatment such as a nitriding treatment, thus contributing to the improvement of the strength of the spring. To exert these effects, the V content is 0.05% or more, preferably 0.10% or more, and more preferably 0.15% or more. Meanwhile, when the V content is high, the amount of composite carbides of Cr and V increases, thus degrading the bendability of the heat-treated steel wire. Therefore, the V content is 0.5% or less, preferably 0.45% or less, and more preferably 0.40% or less.

### [Al: more than 0% and 0.01% or less]

Aluminum (Al) forms inclusions, such as Al₂O₃ and AlN in the steel. These inclusions drastically degrade the fatigue life of the spring. Therefore, the Al content is 0.01% or less, and preferably 0.005% or less.

### [N: more than 0% and 0.007% or less]

Nitrogen (N) is combined with Al to form inclusions, such as AlN. AlN inclusions drastically degrade the fatigue life of the spring. Therefore, the N content is 0.007% or less, preferably 0.006% or less, and more preferably 0.005% or less.

### [O: more than 0% and 0.004% or less]

Any excessive oxygen (O) content forms coarse non-metallic inclusions, thus degrading the fatigue strength. Therefore, the O content is 0.004% or less, and preferably 0.003% or less.

Basic components of the heat-treated steel wire of the present invention are as mentioned above, and the balance is substantially iron. As a matter of course, it is permitted to include inevitable impurities, such as Ca and Na, which are inevitably mixed depending on materials, such as iron raw materials (including scraps) and auxiliary materials, manufacturing facility and the like.

The steel material of the present invention may further include at least Ni or B, as appropriate, and the characteristics of the heat-treated steel wire can be further improved depending on the kinds and contents of included elements. The reason for setting a preferable range when including these elements is as follows.

### [Ni: more than 0% and 0.3% or less]

Nickel (Ni) has the effect of suppressing decarburization during hot-rolling and improving toughness and ductility of the heat-treated steel wire. To effectively exhibit these effects, the Ni content is preferably 0.05% or more, more preferably 0.07% or more, and still more preferably 0.1% or more. Meanwhile, when the Ni content is high, not only Ni is inferior in terms of cost, but also hardenability is excessively improved, leading to formation of supercooled structures such as martensite and bainite during rolling. Therefore, the Ni content is preferably 0.3% or less, more preferably 0.27% or less, and still more preferably 0.2% or less.

### [B: more than 0% and 0.01% or less]

B has the function of improving hardenability and cleaning austenite crystal grain boundary, thus improving toughness and ductility. To effectively exert these effects, the B content is preferably 0.001% or more, more preferably 0.0015% or more, and still more preferably 0.002% or more. Meanwhile, any excessive B content generates precipitation of composite compounds of Fe and B, which may cause cracking during hot-rolling. Hardenability is excessively improved, and thus supercooled structures such as martensite and bainite are easily formed. Therefore, the B content is preferably 0.01% or less, more preferably 0.008% or less, and still more preferably 0.006% or less.

The manufacturing method of the heat-treated steel wire of the present invention is not particularly limited, and known manufacturing conditions can be employed. For example, a steel slab obtained by subjecting a steel material having the above-mentioned chemical component to melting and blooming is hot-rolled into a wire rod having a diameter of about 5.0 to 8.0 mm and coiled into a coil shape, followed by cooling. Thereafter, a shaving treatment of removing flaw and a decarburized portion of a surface layer of a steel wire rod (hereinafter may be referred to as the "rolled wire rod") is carried out without subjecting to a heat treatment. After subjecting to a high-frequency softening treatment or a patenting treatment, the wire rod is drawn into one having a desired wire diameter, for example, a diameter of about 3 to 4 mm, in the case of a wire for a valve spring. The thus obtained wire rod for wire drawing is subjected to a quenching and tempering treatment called oil tempering to obtain a heat-treated steel wire. Various springs such as valve spring and clutch spring are obtained by forming the heat-treated steel wire thus obtained into a spring shape.

To control the precipitate size and the number of Cr based carbides of the heat-treated steel wire, there is a need to control, in addition to the heating temperature during blooming, and the rolling temperature such as cooling starting temperature and cooling rate after coiling during rolling of a wire rod, patenting treatment in secondary working, and heat treatment conditions of a quenching and tempering treatment after a wire drawing treatment.

For example, a steel ingot satisfying the above predetermined chemical composition is melted in a blast furnace and the thus obtained ingot is bloomed to fabricate a billet having a predetermined size. In the blooming step, in order to sufficiently solid-solute Cr based carbides, there is a need to heat the billet to 1, 200°C or higher, preferably 1, 210°C or higher, and more preferably 1, 220°C or higher, before blooming. The more the billet is heated to higher temperature, Cr based carbides can be solid-soluted, so that the upper limit of the heating temperature is not particularly limited. Taking the heat-resistant temperature and heating cost of the heating furnace into consideration, the upper limit of the heating temperature is 1,250°C or lower, preferably 1,240°C or lower, and more preferably 1,230°C or lower.

After hot-rolling, control cooling must be performed. To suppress the formation and growth of Cr based carbides in the cooling process after hot-rolling and to suppress the generation of supercooling structures such as bainite and martensite, and excessive decarburization, there is a need to appropriately cool the rolled wire rod. Specifically, it is desired that the placing temperature when placing on a cooling conveyor after coiling the rolled wire rod, namely, the rolling and coiling temperature is set at 750°C or higher, preferably 780°C or higher, and more preferably 800°C or higher, and 950°C or lower, preferably 920°C or lower, and more preferably 900°C or lower.

In a temperature range from starting of cooling after placing on the conveyor to finishing of pearlite transformation, namely, the average cooling rate up to 600°C (hereinafter may referred to as the "average cooling rate I") is set at 1. 0°C/second or more, and preferably 2°C/second or more, and 6°C/second or less, preferably 5°C/second or less, and more preferably 4°C/second or less. Then, the average cooling rate from lower than 600°C to 300°C (hereinafter may referred to as the "average cooling rate II") is set at 2.0°C/second or more, and preferably 3°C/second or more, and 8°C/second or less, and preferably 7°C/second or less. By controlling the cooling rate in this way, the formation and growth of Cr based carbides can be suppressed and a pearlite structure suited for a secondary working treatment can be formed.

The cooling rate can be controlled, for example, by appropriately combining a rolling linear speed, a conveyor speed, blower cooling, cover cooling and the like. The above temperature can be measured by a radiation thermometer provided at plural positions on the conveyor.

After performing a shaving treatment for removal of a decarburized layer, flaw and the like of a surface layer of the rolled wire rod, and a patenting treatment for obtaining a pearlite structure, the wire rod is drawn into one having a desired wire diameter. The pearlite structure is obtained by controlling heating conditions during patenting, and particularly coarse undissolved Cr based carbides can be suppressed. Therefore, the heating temperature during patenting is set at 850°C or higher, preferably 860°C or higher, and more preferably 870°C or higher. Meanwhile, to suppress degradation of wire drawability due to crystal grain coarsening, the heating temperature is preferably set at 900°C or lower, more preferably 890°C or lower, and still more preferably 880°C or lower. The holding time at the heating temperature is 10 seconds or more, preferably 15 seconds or more, and more preferably 20 seconds or more, and 60 seconds or less, preferably 55 seconds or less, and more preferably 50 seconds or less. The average cooling rate is 1.0°C/second or more, preferably 2.0°C/second or more, 6°C/second or less, and preferably 5°C/second or less. By performing such control cooling, a pearlite structure suited for the subsequent step is obtained and precipitation of coarse Cr based carbides can be suppressed.

Thereafter, a wire-drawn wire rod obtained by wire drawing is subjected to a quenching and tempering treatment. To suppress coarse undissolved Cr based carbides due to insufficient heating, the heating temperature during quenching is 850°C or higher, preferably 860°C or higher, and more preferably 870°C or higher. From the viewpoint of suppressing coarsening of the residual austenite crystal grains leading to degradation of toughness and ductility, the heating temperature is 950°C or lower, preferably 940°C or lower, and more preferably 930°C or lower. To exert the effect at the above heating temperature, there is a need to control the holding time at the heating temperature. The holding time at the heating temperature is 5 seconds or more, preferably 10 seconds or more, and more preferably 15 seconds or more, and 50 seconds or less, preferably 45 seconds or less, and more preferably 40 seconds or less.

After holding for a predetermined time, tempering may be performed using oil heated to for example about 50 to 60°C

After quenching, tempering may be appropriately adjusted to achieve the tensile strength of 2,100 MPa or more. When the tempering temperature is too high and/or the heating holding time is too long, the residual amount of coarse Cr based carbides increases, leading to degradation of the bendability. For example, tempering is performed at the heating temperature of 350°C or higher and 450°C or lower, and the holding time at the heating temperature is 50 seconds or more and 200 seconds or less.

The heat-treated steel wire of the present invention exhibits excellent fatigue characteristics as shown in Examples mentioned hereinafter. The heat-treated steel wire of the present invention can be molded into various springs with the desired coil diameter, free height, and number of turns, such as valve spring, clutch spring, engine spring, and transmission spring. The heat-treated steel wire may be subjected to known various treatments such as nitriding treatment and vacuum carburizing treatment, as appropriate, before molding.

This application claims priority based on Japanese Patent Application 2015-070532 filed on March 31, 2015, the disclosure of which is incorporated by reference herein.

### Examples

While the present invention will be more specifically described below by way of Examples, it is to be understood that the present invention is not limited to the examples, and various design variations made in accordance with the purports described hereinbefore and hereinafter are also included in the technical scope of the present invention.

A steel ingot (150 kg) having the chemical compositions shown in Table 1 was melted in a portable vacuum melting furnace, heated at 1,200°C simulating the blooming temperature, and then subjected to cogging, thereby fabricating steel slabs of 155 mm square. The thus obtained steel slabs were hot-rolled, followed by controlling the placing temperature, the average cooling rate I to 600°C after placing, and the average cooling rate II to 300°C as shown in Table 2, thus fabricating a rolled wire rod having a wire diameter of 8.0 mm. The thus obtained rolled wire rod was subjected to a shaving treatment to remove a decarburized layer, flaw and the like of a surface layer, subjected to a patenting treatment under the conditions shown in Table 2 to form a pearlite structure, and then subjected to the cold drawing into one having a wire diameter of 4.0 mm.

Subsequently, a quenching and tempering treatment was performed under the conditions shown in Table 2. In that case, the tempering treatment was carried out to achieve the tensile strength of 2,100 MPa or more.

The tensile strength, reduction of area, amount of Cr based carbides based on an electrolytic extraction method, and bendability were measured by the following procedures. The results are shown in Table 3.

### [Tensile Strength, Reduction of Area]

Using an autograph (manufactured by Shimadzu Corporation), a tensile test was performed at a gauge length of 200 mm and a strain rate of 20 mm/min, and then the tensile strength was measured and the reduction of area was measured from fracture geometry. It was judged that samples having the reduction of area of 45.0% or more are excellent in roughness and ductility.

### [Amount of Cr based carbides based on an electrolytic extraction method]

Electrolytic extraction residue analysis of Cr based carbides was performed. After removing scales on a surface of a heat-treated steel wire with a sand paper, the surface was cleaned with acetone. The thus obtained sample was immersed in a 10% by mass acetylacetone-containing ethanol solution as an electrolytic solution and, after the amount of an electrolyte from a surface layer of the heat-treated steel wire reached approximately 0.4 to 0.5 g, the specimen was taken out. Metallic Fe in a matrix phase was electrolyzed, and then Cr based carbides in the steel of the electrolytic solution, and other carbides other than Cr based carbides, carbonitrides, and nitrides which exist in a trace amount, were subjected to two-stage filtration with a filter having a mesh diameter 1.0 µm and a filter having a mesh diameter of 0.4 µm [membrane filter, manufactured by Advantec Toyo Corporation] to thereby collect as an extraction residue on each filter. Mass difference of the heat-treated steel wire before and after electrolysis was regarded as the amount of the electrolyte. The amount of the filter residue was divided by the amount of the electrolyte, thus determining the amount of Cr based carbides (%) . Specifically, the electrolytic solution was filtered through a 1.0 µm filter and the thus obtained filtrate was filtered through a 0.4 µm filter. The case where, when electrolytic extraction residue analysis is performed, a ratio of [amount of the residue in a 1.0 µm filter residue/amount of an electrolyte] is 1. 0% or more and 2.80% or less, and when residue analysis of the filtrate obtained by the 1.0 µm filter is performed, a ratio of [amount of the residue in a 0.4 µm filter residue/amount of an electrolyte] is 0.10% or less was rated "Pass".

### [Bendability]

Bendability was evaluated by self-diameter winding. Using each of the thus obtained heat-treated steel wires, self-diameter winding of 1,000 turns was performed, and then superiority or inferiority of the bendability was judged by the number of breakages. The case where the number of breakages is less than 5 times in the case of self-diameter winding of 1,000 turns was rated as superior bendability, whereas, the case where the number of breakages is 5 times or more was rated as inferior bendability.

**[Table 1]**

| No. | Steel type | Chemical composition (% by mass) Balance being iron and inevitable impurities | | | | | | | | | | | |
|---|---|---|---|---|---|---|---|---|---|---|---|---|---|
| | | C | Si | Mn | P | S | Cr | V | Al | N | O | Ni | B |
| 1 | A | 0.62 | 1.88 | 0.66 | 0.015 | 0.005 | 0.34 | 0.12 | 0.003 | 0.0033 | 0.0025 | 0.22 | 0.0033 |
| 2 | B | 0.54 | 2.10 | 0.56 | 0.012 | 0.008 | 0.64 | 0.26 | 0.002 | 0.0041 | 0.0033 | | |
| 3 | C | 0.55 | 2.25 | 0.70 | 0.009 | 0.007 | 0.53 | 0.44 | 0.003 | 0.0032 | 0.0016 | 0.17 | |
| 4 | D | 0.67 | 1.72 | 0.94 | 0.013 | 0.010 | 0.38 | 0.18 | 0.003 | 0.0051 | 0.0030 | | |
| 5 | E | 0.71 | 1.65 | 0.93 | 0.019 | 0.008 | 0.68 | 0.22 | 0.007 | 0.0045 | 0.0027 | 0.20 | 0.0048 |
| 6 | F | 0.63 | 1.91 | 1.07 | 0.018 | 0.007 | 0.47 | 0.26 | 0.003 | 0.0037 | 0.0022 | 0.28 | |
| 7 | G | 0.66 | 1.80 | 0.73 | 0.010 | 0.007 | 0.58 | 0.28 | 0.001 | 0.0041 | 0.0025 | | |
| 8 | H | 0.59 | 2.41 | 1.39 | 0.015 | 0.009 | 0.43 | 0.37 | 0.000 | 0.0038 | 0.0015 | 0.25 | |
| 9 | I | 0.75 | 1.59 | 0.82 | 0.013 | 0.011 | 0.65 | 0.26 | 0.002 | 0.0042 | 0.0031 | | 0.0027 |
| 10 | J | 0.66 | 1.84 | 1.27 | 0.015 | 0.007 | 0.58 | 0.31 | 0.004 | 0.0027 | 0.0028 | 0.11 | 0.0033 |
| 11 | A | 0.62 | 1.88 | 0.66 | 0.015 | 0.005 | 0.34 | 0.12 | 0.003 | 0.0033 | 0.0025 | | 0.0033 |
| 12 | B | 0.54 | 2.10 | 0.56 | 0.012 | 0.008 | 0.64 | 0.26 | 0.002 | 0.0041 | 0.0033 | | |
| 13 | B | 0.54 | 2.10 | 0.56 | 0.012 | 0.008 | 0.64 | 0.26 | 0.002 | 0.0041 | 0.0033 | | |
| 14 | B | 0.54 | 2.10 | 0.56 | 0.012 | 0.008 | 0.64 | 0.26 | 0.002 | 0.0041 | 0.0033 | | |
| 15 | B | 0.54 | 2.10 | 0.56 | 0.012 | 0.008 | 0.64 | 0.26 | 0.002 | 0.0041 | 0.0033 | | |
| 16 | C | 0.55 | 2.25 | 0.70 | 0.009 | 0.007 | 0.53 | 0.44 | 0.003 | 0.0032 | 0.0016 | 0.17 | |
| 17 | C | 0.55 | 2.25 | 0.70 | 0.009 | 0.007 | 0.53 | 0.44 | 0.003 | 0.0032 | 0.0016 | 0.17 | |
| 18 | C | 0.55 | 2.25 | 0.70 | 0.009 | 0.007 | 0.53 | 0.44 | 0.003 | 0.0032 | 0.0016 | 0.17 | |
| 19 | C | 0.55 | 2.25 | 0.70 | 0.009 | 0.007 | 0.53 | 0.44 | 0.003 | 0.0032 | 0.0016 | 0.17 | |
| 20 | C | 0.55 | 2.25 | 0.70 | 0.009 | 0.007 | 0.53 | 0.44 | 0.003 | 0.0032 | 0.0016 | 0.17 | |
| 21 | D | 0.67 | 1.72 | 0.94 | 0.013 | 0.010 | 0.38 | 0.18 | 0.003 | 0.0051 | 0.0030 | | |
| 22 | D | 0.67 | 1.72 | 0.94 | 0.013 | 0.010 | 0.38 | 0.18 | 0.003 | 0.0051 | 0.0030 | | |
| 23 | K | 0.87 | 1.80 | 0.93 | 0.015 | 0.009 | 0.62 | 0.23 | 0.003 | 0.0038 | 0.0013 | | |
| 24 | L | 0.77 | 2.56 | 0.89 | 0.011 | 0.010 | 0.38 | 0.11 | 0.003 | 0.0039 | 0.0018 | 0.25 | |
| 25 | M | 0.62 | 1.98 | 0.88 | 0.011 | 0.007 | 0.75 | 0.27 | 0.003 | 0.0038 | 0.0016 | 0.18 | 0.0028 |
| 26 | N | 0.61 | 2.03 | 0.92 | 0.012 | 0.009 | 0.58 | 0.56 | 0.003 | 0.0038 | 0.0022 | | |

**[Table 2]**

| No. | Bloom heating temperature [°C] | Rolling | | | Patenting | | | Quenching | | Tempering | |
|---|---|---|---|---|---|---|---|---|---|---|---|
| | | Placing temperature [°C] | Average cooling rate I [°C/sec] | Average cooling rate II [°C/sec] | Heating temperature [°C] | Holding time [sec] | Average cooling rate [°C/sec] | Heating temperature [°C] | Holding time [sec] | Heating temperature [°C] | Holding time [sec] |
| 1 | 1,220 | 830 | 3.3 | 3.4 | 880 | 30 | 3.0 | 870 | 20 | 410 | 170 |
| 2 | 1,230 | 910 | 3.3 | 6.4 | 890 | 40 | 3.0 | 900 | 40 | 390 | 70 |
| 3 | 1,240 | 880 | 2.8 | 4.8 | 880 | 50 | 3.0 | 890 | 40 | 390 | 80 |
| 4 | 1,230 | 790 | 4.2 | 7.1 | 900 | 20 | 2.0 | 910 | 30 | 420 | 120 |
| 5 | 1,200 | 880 | 2.5 | 4.8 | 860 | 50 | 3.0 | 910 | 40 | 420 | 80 |
| 6 | 1,230 | 810 | 4.7 | 5.1 | 890 | 40 | 4.0 | 930 | 50 | 430 | 80 |
| 7 | 1,200 | 920 | 3.7 | 3.1 | 880 | 30 | 3.0 | 890 | 40 | 420 | 70 |
| 8 | 1,210 | 890 | 4.1 | 7.7 | 860 | 40 | 5.0 | 880 | 30 | 400 | 140 |
| 9 | 1,240 | 910 | 2.6 | 5.7 | 890 | 50 | 2.0 | 900 | 30 | 430 | 120 |
| 10 | 1,230 | 870 | 2.8 | 6.5 | 900 | 30 | 3.0 | 890 | 40 | 430 | 80 |
| 11 | 1,130 | 850 | 3.5 | 4.8 | 880 | 30 | 2.0 | 860 | 20 | 420 | 90 |
| 12 | 1,140 | 810 | 3.3 | 5.2 | 880 | 40 | 3.0 | 880 | 30 | 410 | 80 |
| 13 | 1,210 | 970 | 2.5 | 5.3 | - | - | - | - | - | - | - |
| 14 | 1,220 | 900 | 0.7 | 4.8 | 880 | 50 | 3.0 | 920 | 20 | 390 | 50 |
| 15 | 1,210 | 890 | 2.8 | 1.5 | 900 | 30 | 4.0 | 900 | 30 | 390 | 30 |
| 16 | 1,240 | 900 | 1.9 | 6.3 | 840 | 30 | 2.0 | 910 | 50 | 400 | 40 |
| 17 | 1,230 | 920 | 4.1 | 7.1 | 890 | 5 | 4.0 | - | - | - | - |
| 18 | 1,240 | 850 | 3.8 | 4.8 | 870 | 30 | 0.8 | 880 | 50 | 400 | 50 |
| 19 | 1,240 | 860 | 3.5 | 7.4 | 890 | 50 | 3.0 | 830 | 30 | 400 | 100 |
| 20 | 1,230 | 880 | 4.3 | 5.7 | 880 | 20 | 2.0 | 920 | 3 | 430 | 90 |
| 21 | 1,230 | 880 | 3.3 | 5.1 | 850 | 40 | 4.0 | 930 | 30 | 470 | 30 |
| 22 | 1,220 | 830 | 3.7 | 5.1 | 890 | 40 | 3.0 | 880 | 40 | 430 | 220 |
| 23 | 1,240 | 890 | 2.8 | 5.8 | 860 | 50 | 2.0 | 940 | 40 | 470 | 90 |
| 24 | 1,240 | 840 | 3.7 | 6.8 | 900 | 30 | 3.0 | 890 | 30 | 470 | 110 |
| 25 | 1,230 | 820 | 3.2 | 7.0 | 860 | 30 | 4.0 | 940 | 40 | 420 | 100 |
| 26 | 1,240 | 880 | 3.6 | 5.1 | 890 | 40 | 3.0 | 890 | 50 | 400 | 70 |

**[Table 3]**

| No. | Tensile strength [MPa] | Toughness and Ductility | Electrolytic extraction residue analysis | | Bendability |
|---|---|---|---|---|---|
| | | Reduction of area [%] | 1.0 µm filter: Mass [%] | 0.4 µm filter: Mass [%] | Number of Self-diameter winding Breakage |
| 1 | 2,103 | 49.8 | 1.31 | 0.01 | 0 |
| 2 | 2,147 | 48.3 | 2.71 | 0.02 | 0 |
| 3 | 2,130 | 49.8 | 2.08 | 0.01 | 0 |
| 4 | 2,118 | 52.4 | 2.49 | 0.05 | 1 |
| 5 | 2,118 | 50.4 | 1.88 | 0.04 | 0 |
| 6 | 2,128 | 48.9 | 2.61 | 0.07 | 2 |
| 7 | 2,121 | 50.3 | 1.81 | 0.04 | 0 |
| 8 | 2,124 | 48.8 | 2.10 | 0.05 | 0 |
| 9 | 2,148 | 50.8 | 2.34 | 0.05 | 1 |
| 10 | 2,138 | 52.9 | 1.58 | 0.01 | 0 |
| 11 | 2,128 | 51.5 | 2.71 | 0.28 | 28 |
| 12 | 2,108 | 53.8 | 2.59 | 0.22 | 17 |
| 13 | - | - | - | - | - |
| 14 | 2,108 | 49.8 | 2.70 | 0.14 | 20 |
| 15 | 2,118 | 48.1 | 3.33 | 0.07 | 19 |
| 16 | 2,132 | 49.1 | 2.99 | 0.08 | 22 |
| 17 | - | - | - | - | - |
| 18 | 2,123 | 52.4 | 2.57 | 0.18 | 8 |
| 19 | 2,141 | 34.8 | 3.35 | 0.33 | 19 |
| 20 | 2,110 | 50.7 | 2.88 | 0.18 | 22 |
| 21 | 2,138 | 48.5 | 3.41 | 0.09 | 17 |
| 22 | 2,135 | 52.9 | 4.18 | 0.09 | 30 |
| 23 | 2,141 | 44.5 | 4.81 | 0.28 | 24 |
| 24 | 2,117 | 43.7 | 3.91 | 0.09 | 18 |
| 25 | 2,125 | 52.0 | 5.19 | 0.40 | 22 |
| 26 | 2,108 | 52.8 | 2.38 | 0.18 | 31 |

The samples of test Nos. 1 to 10 are examples that satisfy the requirements defined by the present invention. These samples had high strength and excellent bendability since compositions and Cr based carbides are controlled.

The samples of test Nos. 11 and 12 are examples in which the heating temperature before blooming is low. Therefore, it was impossible to sufficiently solid-solute Cr based carbides, and numerous Cr based carbides remained in the 0.4 µm filter residue, leading to inferior bendability.

The sample of test No. 13 is an example in which the conveyor replacing temperature after finishing wire rod rolling, namely, the cooling starting temperature was high. Therefore, supercooled structures were generated and wire breakage occurred by the shaving treatment, so that the evaluation was stopped.

The sample of test No. 14 is an example in which the average cooling rate I from starting of cooling to 600°C during wire rod rolling was low. Therefore, the growth of Cr based carbides proceeded and numerous coarse Cr based carbides remained in the 0.4 µm filter residue, leading to inferior bendability.

The sample of test No. 15 is an example in which the average cooling rate II to 300°C was low. In this example, the growth of Cr based carbides proceeded and numerous coarse Cr based carbides remained in the 1.0 µm filter residue after quenching and tempering, leading to inferior bendability.

The sample of test No. 16 is an example in which the heating temperature during the patenting treatment was low. In this example, Cr based carbides remaining during a patenting treatment remained even after the quenching and tempering treatment, so that numerous Cr based carbides remained in the 1.0 µm filter residue, leading to inferior bendability.

The sample of test No. 17 is an example in which the heating and holding time during patenting was short. In this example, defective structures were formed and wire breakage occurred during wire drawing, so that the test was stopped.

The sample of test No. 18 is an example in which the average cooling rate during the patenting treatment was low. In this example, the growth of Cr based carbides proceeded and numerous coarse Cr based carbides remained in the 0.4 µm filter residue after quenching and tempering, leading to inferior bendability.

The sample of test No. 19 is an example in which the heating temperature during quenching was low. In this example, coarse undissolved Cr based carbides were formed, thus degrading toughness and ductility. Numerous Cr based carbides remained in the 1.0 µm filter residue and the 0.4 mm filter residue, leading to inferior bendability.

The sample of test No. 20 is an example in which the heating and holding time during quenching was short. In this example, numerous Cr based carbides remained in the 1.0 µm filter residue and the 0.4 mm filter residue, leading to inferior bendability.

The sample of test No. 21 is an example in which the tempering temperature was high and the holding time was short. In this example, numerous Cr based carbides remained in the 1.0 µm filter residue, leading to inferior bendability.

The sample of test No. 22 is an example in which the heating and holding time of tempering was long. In this example, numerous Cr based carbides remained in the 1.0 mm filter residue, leading to inferior bendability.

The sample of test No. 23 is an example in which the C content was high and the tempering temperature was high. In this example, coarse undissolved Cr based carbides were formed, leading to degradation of toughness and ductility. Numerous Cr based carbides remained in the 1.0 µm filter residue and the 0.4 mm filter residue, leading to inferior bendability.

The sample of test No. 24 is an example in which the Si content was high and the tempering temperature was high. In this example, coarse undissolved Cr based carbides were formed, leading to degradation of toughness and ductility. Numerous Cr based carbides remained in the 1.0 µm filter residue, leading to inferior bendability.

The sample of test No. 25 is an example in which the Cr content was high. The growth of Cr based carbides proceeded and, after quenching and tempering, numerous Cr based carbides remained in the 1.0 µm filter residue and the 0.4 mm filter residue, leading to inferior bendability.

The sample of test No. 26 is an example in which the V content was high. In this example, the growth of Cr based carbides proceeded and, after quenching and tempering, numerous Cr based carbides remained in the 0.4 µm filter residue, leading to inferior bendability.

## Claims

1. A heat-treated steel wire having excellent bendability, comprising, in % by mass:
C: 0.5 to 0.8%,
Si: 1.5 to 2.5%,
Mn: 0.5 to 1.5%,
P: more than 0% and 0.02% or less,
S: more than 0% and 0.02% or less,
Cr: 0.3 to less than 0.7%,
V: 0.05 to 0.5%,
Al: more than 0% and 0.01% or less,
N: more than 0% and 0.007% or less, and
O: more than 0% and 0.004% or less, with the balance being iron and inevitable impurities, wherein
when electrolytic extraction residue analysis is performed using a 1.0 µm filter and a 0.4 µm filter, a ratio of [amount of Cr based carbides in a 1.0 µm filter residue/amount of an electrolyte] is 1.0% or more and 2.80% or less, and
when residue analysis of the filtrate obtained by the 1.0 µm filter is performed, a ratio of [amount of Cr based carbides in a 0.4 µm filter residue/amount of an electrolyte] is 0.10% or less.

2. The heat-treated steel wire according to claim 1, further comprising, in % by mass, at least one of the following (a) and (b) :
(a) Ni: more than 0% and 0.3% or less, and
(b) B: more than 0% and 0.01% or less.

3. A spring obtained by using the heat-treated steel wire according to claim 1 or 2.
